# EUROPEAN PATENT SPECIFICATION

(11) **EP 4 314 938 B1**
(45) Date of publication and mention of the grant of the patent: **14.01.2026**
(21) Application number: 22720384.1
(22) Date of filing: 31.03.2022
(51) Int. Cl.: G02B 27/64

(54) **AN ACTUATOR ASSEMBLY AND A METHOD OF OPERATION THEREOF**
AKTUATORANORDNUNG UND VERFAHREN ZUM BETRIEB DAVON
ENSEMBLE ACTIONNEUR ET SON PROCÉDÉ DE FONCTIONNEMENT

(30) Priority: 31.03.2021 GB 202104687
(43) Date of publication of application: 07.02.2024
(73) Proprietor: Cambridge Mechatronics Limited, Cambridge CB4 0WG (GB)
(72) Inventor: EDDINGTON, Robin, Cambridge Cambridgeshire CB4 1YG (GB)
(74) Representative: Cambridge Mechatronics Limited
(86) International application number: PCT/EP2022/058738
(87) International publication number: WO 2022/207898

(56) References cited:
- WO-A1-2021/005351
- US-A1- 2011 102 613
- US-A1- 2015 135 703

## Description

### Field

The present application generally relates to an actuator assembly and a method of operation thereof, and in particular to a shape memory alloy (SMA) actuator assembly.

### Background

Shape memory alloy (SMA) actuators are used in camera assemblies for effecting a range of motions of a lens carriage or an image sensor. For example, WO 2013/175197 A1 describes a camera with an SMA actuator assembly SMA wires are configured to, on contraction, move a lens carriage in directions perpendicular to an optical axis to provide optical image stabilization (OIS). In these known embodiments, the lens carriage is permanently attached to, and sometimes suspended by, the SMA wires. When the actuator assembly is subjected to sudden accelerations, e.g. during a drop, the inertia of the lens may subject the SMA wires to excessive tension and in some cases causes irreversible damage. This problem is particularly prominent in SMA actuators carrying heavier lenses. WO2017/072525A1 discloses a similar actuator arrangement configured to shift an image sensor perpendicular to the optical axis. During the assembly process, the SMA actuators typically have some degree of component integration with an Image sensor assembly (including a sensor, a bracket, and circuitry). Since the integration with the image sensor involves processes that can affect actuator performance, it is improbable to test the actuator performance before assembly. Therefore, any performance issue in the SMA actuator discovered after assembly would mean the entire module being rejected.

A further actuator assembly having movable parts is known from US-A 1-2011/102613.

### Summary

The present invention provides ways to allow components such as a lens carriage or an image sensor to be removably attached to a moveable platform, and wherein the components may be repositioned to or realigned at the desired position in a completed assembly by actuating only the moveable platform.

According to a first aspect of the present invention, there is provided an actuator assembly as specified in appended claim 1.

The actuator assembly may be a micro-actuator for a camera or a mobile phone. The first part may correspond to a support structure and the second part may correspond to a movable platform. The third part may correspond to any one of a lens carriage, an AF module, a support for an image sensor or light emitter, e.g. VCSEL used in time-of-flight 3D sensing. The actuator assembly comprises one or more (e.g. elongate) SMA wires, which may directly connect with the second part, or may connect to the second part by a force-modifying mechanism. That is, in relation to the latter, one end of the SMA wire may be attached to the force-modifying mechanism, whereby the actuating force from the SMA wire may be applied as an output force to the second part through the force-modifying mechanism.

Specifically, the force-modifying mechanism is not an SMA wire, and the output force may be the same, or different from, the actuating force.

The term 'shape memory alloy (SMA) wire' may refer to any element comprising SMA. The SMA wire may have any shape that is suitable for the purposes described herein. The SMA wire may be elongate and may have a round cross section or any other shape cross section. The cross section may vary along the length of the SMA wire. It is also possible that the length of the SMA wire (however defined) may be similar to one or more of its other dimensions. The SMA wire may be pliant or, in other words, flexible. In some examples, when connected in a straight line between two elements, the SMA wire can apply only a tensile force which urges the two elements together. In other examples, the SMA wire may be bent around an element and can apply a force to the element as the SMA wire tends to straighten under tension. The SMA wire may be beam-like or rigid and may be able to apply different (e.g. non-tensile) forces to elements. The SMA wire may or may not include material(s) and/or component(s) that are not SMA. For example, the SMA wire may comprise a core of SMA and a coating of non-SMA material. Unless the context requires otherwise, the term 'SMA wire' may refer to any configuration of SMA wire acting as a single actuating element which, for example, can be individually controlled to produce a force on an element. For example, the SMA wire may comprise two or more portions of SMA wire that are arranged mechanically in parallel and/or in series. In some arrangements, the SMA wire may be part of a larger piece of SMA wire. Such a larger piece of SMA wire might comprise two or more parts that are individually controllable, thereby forming two or more SMA wires.

The SMA wires may be formed of any suitable shape memory alloy material, typically a nickel-titanium alloy (e.g. Nitinol), possibly also containing tertiary components such as copper. The SMA wires may have any cross-sectional profile and diameter suitable for the application. For example, the SMA wires may have a cross section diameter of 25µm, or 30µm, or 35µm, capable of generating a maximum force of between 120mN to 400mN whilst maintaining the strain in the SMA wire within safe limits (e.g. 2-3% reduction in length over original length). Increasing the diameter of each SMA wire from 25µm to 35µm approximately doubles the cross-sectional area of the SMA wire and thus approximately doubles the force provided by each SMA wire.

Broadly speaking, during normal operation the second part moves in the movement direction wherein the third part, in absence of any resistance, moves with the second part. Therefore, the relative positions and orientations of the second part and the third part remain unchanged. (For brevity, the term "position" will be generally used herein to refer to position and/or orientation.) The movement of the lens carriage, the image sensor, or the light emitter (e.g. the third part), may precisely follow the movement of the moving platform (e.g. the second part).

The third part may be arranged to, when positioned away from a default position, return to the default position when it is being driven against the endstop. When the third part is required to be moved into a predetermined position, e.g. a centred or default position relative to the second part, the second part moves into a position (within or outside a movement range suitable for normal operation) where a side of the third part engages, or abuts, a corresponding endstop on the first part. When the second part continues to move towards the endstop, the latter pushes against the third part and therefore causing the third part (whilst remaining engaged with the endstop) to move or slide relative to the second part. The second part may continue to move until the endstop has pushed the third part to a desired position, e.g. the centred or default position, on the second part. The third part may be maintained at the desired moved position on the second part when the second part moves in an opposite direction to the movement direction, e.g. when the second part retracts from the endstop.

Advantageously, such an arrangement may allow the third part to slide along the surface of the second part. Therefore, in the event of sudden acceleration, the inertia of the third part would not cause excessive tension in the SMA wires. Moreover, such an arrangement may allow the second part to be realigned or repositioned into a default position. This may take place after the third part has been dislodged from the second part, or as a part of a calibration sequence, e.g. after assembly during a factory calibration, or when the device is switched on, or upon receiving a user input. In addition, such a technique may allow rework of an image sensor assembly from a camera module that has failed its final camera test, e.g. arising from shift actuator performance reasons or for other reasons such as particle ingress, excessive tilt or failure in another actuator such as autofocus (AF) actuator in the assembly.

Optionally, at a default position the third part is separated from the endstop by a predetermined clearance, and this predetermined clearance is arranged to accommodate the movement of the second part during normal operation during which the third part is maintained at the default position on the second part. Advantageously, such predetermined clearance may prevent the second part from accidentally coming into contact with the endstop. The predetermined clearance may be selected totr54 e adequate tolerance, yet not too large such that the third part has to move excessively before engaging the endstop.

Optionally, at the default position, the third part is centred on the second part in the movement direction. Alternatively, or in addition, at the default position, the third part is centred at an optical axis such that it is aligned with other components in the assembly.

Optionally, the second part is moveable within a movement range during normal operation, wherein the second part is configured to move beyond the movement range to return the third part to the default position. For example, the second part may have to a stroke longer than its normal displacement range (e.g. 100µm) in order to allow the endstop to push the third part further along the surface of the second part. In some cases, such a longer stroke may allow the third part to be pushed to, and beyond, the default position.

Optionally, the endstops are provided on opposite sides of the third part along the movement direction. The two opposite endstops may push on the corresponding side of the third part, in opposite directions, to the default position.

Optionally, the actuator arrangement comprises a plurality of the SMA wires capable of being selectively driven to move the second part in two orthogonal directions in a movement plane, and wherein an endstop is provided at each of four sides of the second part. Optionally, the actuator arrangement comprises four non-collinear SMA wires each connected at a respective quadrilateral side of the second part, wherein the SMA actuator wires are capable of being selectively driven to move the second part in two orthogonal directions in a movement plane without applying any net torque to the second part, and wherein an endstop is provided at each quadrilateral side. For example, endstops may be provided for each of the four sides of the support structure, such that the third part may be recalibrated to a default position on the second part.

Optionally, the actuator arrangement is configured to sequentially move the second part toward the four quadrilateral sides so as to drive the third part against the respective endstops to move the third part to its default position. The sequence may comprise moving the third part in two opposite directions (e.g. forward and rearward) before moving it perpendicularly (e.g. leftward and rightward). The sequence may be moving the third part in different directions sequentially clockwise (e.g. forward, rightward, rearward, and leftward) or anticlockwise.

Optionally, the actuator arrangement is configured to move the second part diagonally towards a corner between two sides so as to drive the third part against two adjacent endstops to move the third part to its default position. For example, the second part may move diagonally towards a corner between endstops at the front and right sides, before moving in the reverse direction towards an opposite corner between endstops at the rear and left sides.

Optionally, the second part comprises a planar surface, wherein the third part is supported, and movable, on the planar surface. Advantageously, such an arrangement prevents jitter during the movement of the third part. The surface may comprise a bearing element or frictional material depending on the frictional forces required to retain the third part on the second part during normal operation.

Optionally, the actuator arrangement comprises means (i.e. "retaining means") arranged to apply a retaining force on the third part in order to maintain the relative positions of the third part and the second part during normal operation, wherein the retaining force is insufficient to maintain said relative position when the third part is driven against the endstop. The means may comprise one or more of a biasing element, a magnet, and a viscous fluid, or any other suitable means.

The actuator assembly may comprise one or more further endstops configured to limit movement of the third part relative to the second part in a direction other than a movement direction. The direction other than a movement direction may be a direction perpendicular to the movement plane. The third part may engage with the further endstops if, for example, the third part becomes at least partly disconnected from the second part due to a mechanical shock. The further endstop may limit the movement of the third part such that the retaining means is subsequently able to reconnect the second and third parts.

According to a second aspect of the present invention, there is provided a method of operating an actuator assembly as specified in appended claim 12.

Optionally, the method comprises moving the third part to a default position. At the default position, the third part may be separated from the endstop by a predetermined clearance.

The method may comprise, after moving the second part so as to move the third part to the default position, affixing the third part to the second part. This fixing may be achieved with an adhesive, for example. Such a method may, for example, be applied as part of the factory calibration process once the third part is assembled in the actuator assembly in the factory. There may be provided an actuator assembly obtainable by this method.

Alternatively, the method may be applied as a regular calibration procedure that runs upon start-up of the device or upon receiving a user command. The method may also be applied to realign the third part with other components once misalignment is detected or upon receiving user input.

### Brief Description of the Drawings

Certain embodiments of the present invention will now be described, by way of
example only, with reference to the accompanying drawings, in which:
Fig. 1 is a schematic cross-sectional view of a camera apparatus including a camera assembly;
Fig. 2 is a cross-sectional view of the camera assembly;
Fig. 3 is a perspective view of a moving plate of a carrier of the camera assembly;
Fig. 4 is a plan view of the camera assembly from above;
Fig. 5 is an enlarged cross-sectional view of the camera assembly;
Fig. 6 is an enlarged plan view of the camera assembly in a centred configuration;
Fig. 7 is an enlarged plan view of the camera assembly in an off-centred configuration; and
Figure 8A and 8B are illustrations showing the processing of changing the camera assembly from the centred configuration to the off-centred configuration.

### Detailed Description

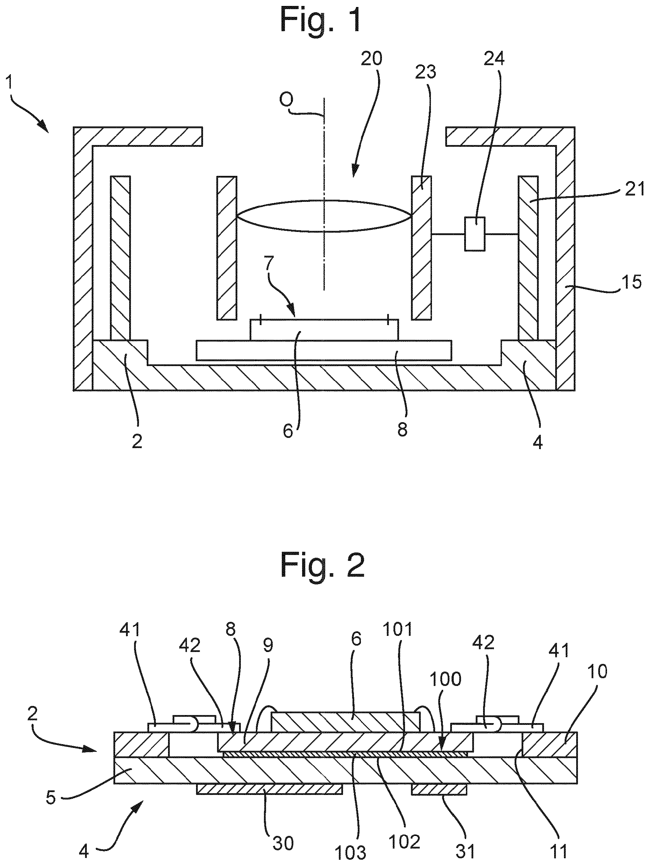

A camera apparatus 1 that incorporates an OIS sensor shift camera assembly 2 in accordance with the present invention is shown in Fig. 1, which is a cross-sectional view taken along the optical axis O. The camera apparatus 1 is to be incorporated in a portable electronic device such as a mobile telephone, or tablet computer. Thus, miniaturisation is an important design criterion.

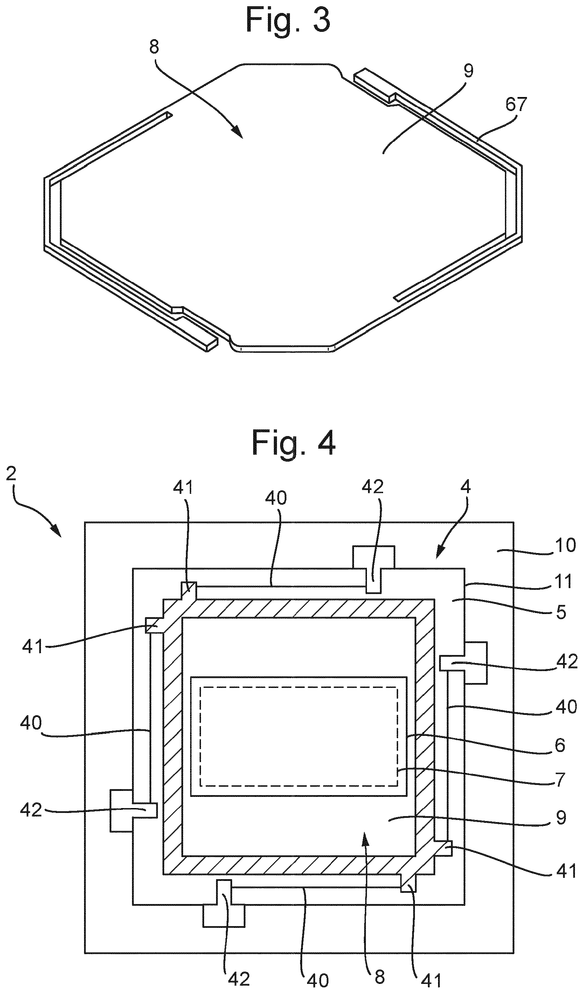

The camera assembly 2 is shown in detail in Figs. 2 to 4, Fig. 2 being a side view of the camera assembly 2, Fig. 3 being a perspective view of a moving plate 9 of a carrier 8 of the camera assembly 2; and Fig. 4 being a plan view of the camera assembly 2. For clarity, Figs. 2 and 4 omit the flexures 67 described below. The camera assembly 2 may be manufactured first and then assembled with the other components of the camera apparatus 1.

The camera assembly 2 comprises a support structure 4 on which is supported an image sensor 6 having a light-sensitive region 7. The optical axis O is orthogonal to the light-sensitive region 7. The image sensor 6 captures an image and may be of any suitable type, for example a CCD (charge-coupled device) or a CMOS (complementary metal-oxide-semiconductor) device. As is conventional, the image sensor 6 has a rectangular light-sensitive region 7. Without limitation to the invention, in this example the camera apparatus 1 is a miniature camera in which the light-sensitive region 7 of the image sensor 6 has a diagonal length of at most 12mm.

The image sensor 6 is mounted on a carrier 8 (e.g. the third part) which is supported on a moving plate 9. The moving plate 9 may formed from sheet material, which may be a metal for example steel such as stainless steel. The moving plate 9 is shown in isolation in Fig. 3 and includes flexures 67 that are described in more detail below.

The image sensor 6 as illustrated here is merely used as an example. Other components, such as a lens carriage carrying one or more lenses, as well as light emitters such as VCSEL may be mounted on the carrier 8.

The carrier 8 may comprise a single layer of material, or other layers of material which may be attached to each other or laminated.

The support structure 4 comprises a support plate 5 which may be formed from sheet material, which may be a metal for example steel such as stainless steel.

Although the support structure 4 comprises a single support plate 5 in this example, optionally the support structure 4 may comprise other layers which may be attached to or laminated with the support plate 5.

The support structure 4 further comprises a rim portion 10 fixed to the front side of the support plate 5 and extending around the support plate 5. The rim portion 10 has a central aperture 11.

The support structure 4 further comprises an IC (integrated circuit) chip 30 and a gyroscope sensor 31 fixed on the rear side of the support plate 5. A control circuit described further below is implemented in the IC chip 30.

The moving plate 9, together with the carrier 8 supported thereon, is suspended on the support structure 4 in a manner allowing movement of the image sensor 6 in any direction laterally to the light-sensitive region 7 of the image sensor 6 (i.e. laterally of the optical axis O and parallel to the plane in which the light-sensitive region 7 extends) and further allowing rotation of the image sensor about the optical axis O. In the illustrated example, the moving plate 9 is suspended on the support structure 4 by a suspension system in the form of a plain bearing 100 provided between the support plate 5 and the moving plate 9 as will now be described.

In this example, the plain bearing 100 comprises a first bearing surface 101 on the moving plate 9, in particular being the lower surface of the moving plate 9, and a second bearing surface 102 on the support structure 4, in particular being the upper surface of the support plate 5. In this example, bearing surfaces 101 and 102 are each planar. The bearing surfaces 101 and 102 bear on each other and thereby suspend the moving plate 9 on the support structure 4. Since the bearing surfaces 101 and 102 may slide relative to each other, they allow movement of the image sensor 6 in any direction laterally to the light-sensitive region 7 of the image sensor 6 and further allow rotation of the image sensor about the optical axis O.

The plain bearing 100 not only suspends the image sensor 6, but also facilitates heat transfer from the image sensor 6 to the support structure 4. This is because the bearing surface surfaces 101 and 102 provide a continuous region of thermally conductive material without an air gap. This provides a path having good thermal conductivity for dissipating heat from the image sensor 6, as well as providing the requisite suspension. This allows the support structure 4 to act as a heat sink for the image sensor 6.

Heat transfer from the image sensor 6 is further facilitated by forming the carrier 8, the moving plate 9 and support plate 5 from materials having a high thermal conductivity, for example metal.

Movement of the image sensor 6 relative to the support structure 4 is driven by an actuator arrangement that is arranged as follows, and seen most easily in Fig. 4. The actuator arrangement is formed by a total of four SMA actuator wires 40 connected between the support structure 4 and the moving plate 9. For attaching the SMA actuator wires 40, the moving plate 9 comprises crimp portions 41 fixed to the moving plate 9 and the support structure 4 comprises crimp portions 42 fixed to the rim portion 10. The crimp portions 41 and 42 crimp the four SMA actuator wires 40 so as to connect them to the support structure 4 and the moving plate 9. The crimp portions 41 fixed to the moving plate 9 are formed integrally from a sheet of metal so as to electrically connect the SMA actuator wires 40 together.

Although in this example the crimp portions 41 and 42 are separate elements fixed to the moving plate 9 and the rim portion 10, as an alternative the crimp portions 41 could be formed integrally with the moving plate 9 and/or the crimp portions 42 could be formed integrally with the support plate 5.

The SMA actuator wires 40 are arranged as follows so that they are capable, on selective driving, of moving the image sensor 6 relative to the support structure 4 in any direction laterally to the light-sensitive region 7 of the image sensor 6 and also of rotating the image sensor 6 about the optical axis O.

Each of the SMA actuator wires 40 is held in tension, thereby applying a force between the support structure 4 and the carrier 8.

The SMA actuator wires 40 may be perpendicular to the optical axis O so that the
force applied to the moving plate 9 is lateral to the light-sensitive region 7 of the image sensor 6. Alternatively, the SMA actuator wires 40 may be inclined at a small angle to the light-sensitive region 7 of the image sensor 6 so that the force applied to the carrier 8 includes a component lateral to the light-sensitive region 7 of the image sensor 6 and a component along the optical axis O that acts as a biasing force that biases the bearing surfaces 101 and 102 of the plain bearing 100 together.

The overall arrangement of the SMA actuator wires 40 is similar to that described in WO2017/072525A1, incorporated herein by reference.

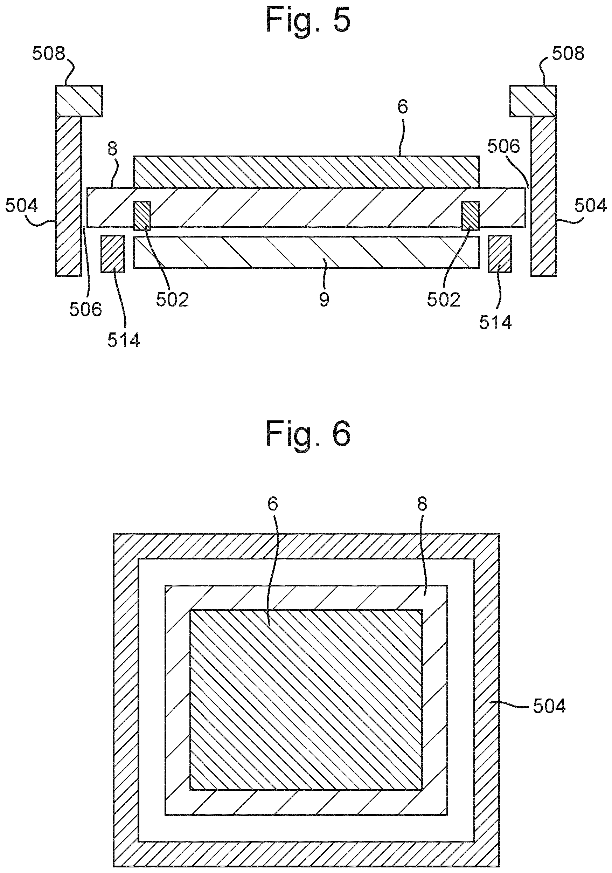

Figure 5 and Figure 6 are respectively an enlarged cross-sectional view and a plan view of the camera assembly, in particular, to highlight the arrangement of the carrier 8 (third part) and the moving plate 9 (second part). As shown in Figure 5, the carrier 8 is detachably attached to the moving plate 9 by a pair of magnets 502 (or by a magnet and a ferromagnetic material). More specifically, the pair of magnets 502, as installed flushed with, or proud of, the bottom face of the carrier 8, applies a force on the carrier 8 so as to attract the carrier 8 towards the moving plate 9. The material of the moving plate 9 is chosen to have a high magnetic permeability that makes it suitable for the purpose. In some other embodiments, flexures or other biasing means may be used in lieu of the magnets.

Typically this force would be minimised to be just sufficient normal operation for all tolerance conditions. Minimising the force ensures that the resulting frictional force is low so that it does not hinder the movement of the carrier 8 relative to the moving plate 9. That is, a low frictional force reduces the likelihood of jitter.

During normal operation, e.g., no resistance is exerted on carrier 8 during the movement of moving plate 9, the force is sufficient to retain the position of the carrier 8 on the moving plate 9. However, when the resistance to the movement of carrier 8 exceeds the force, the carrier 8 may slide across the planar surface of the moving plate 9. Moreover, the carrier 8 may be detached from the moving plate 9 if the device is subjected to sudden acceleration, or if the carrier 8 is being lifted from the moving plate 9. The force applied by the magnet is sufficient to reattach the carrier 8 onto the moving plate 9 after it has been detached.

Figure 5 and Figure 6 show plural endstops 504 with a predetermined clearance 506 provided between the endstops 504 and the carrier 8. The predetermined clearance 506 as shown in the figures is for illustration only and not to scale. The endstops 504 having a conforming profile with a respective side of the carrier 8. The predetermined clearance 506 allows the moving plate 9 to move with a first movement range during normal operation. That is, the moving plate 9 may move in two perpendicular directions for effecting OIS.

The carrier 8 has precision side surfaces and is surrounded by precision manufactured endstops 504 (item 5 in Fig. 1 and Fig 2). Typically the clearance 506 between the carrier 8 and the endstops 504 would be equal to the sum of a closed loop rated stroke of the actuator (e.g. travel of moving plate during normal operation) and the manufacturing tolerances of the carrier 8 and endstops 504. For example, an actuator that has 100um closed loop stroke and 20um component width tolerances (taking into account the tolerances for both the carrier 8 and endstops 504) would need to have a 140um clearance to prevent any reduction of closed loop stroke. In order that the actuator can drive the carrier 8 into the endstops 504 for all tolerance conditions, during the recentring routine, the moving plate 9 needs to be able to move more than the nominal endstop clearance plus the manufacturing tolerances so in the above example this would be 140um. Typically, an SMA actuator would be able to produce a movement of such magnitude in open loop stroke.

Figure 5 also shows plural actuator endstops 514, which defines the absolute range of movement of the moving plate 9. The actuator endstops 514 is typically less robust than the endstops 504 because they only need to be strong enough to absorb the inertia of the moving components in the actuator, which in some cases is likely to be as low as a fifth of that from the carrier 8. Therefore, they may be simpler and smaller in design.

Notably, the stroke of movement of the moving plate 9 is greater than that of the carrier 8, e.g. the movement of carrier 8 would stop once it engages the endstops 54. Therefore, when the moving plate 9 is displaced beyond a movement range as adapted by a normal operation, it causes the carrier 8 to engage (or abut) the endstops 504, and in the process eliminates any clearance therebetween. In order to move the carrier 8 relative to the moving plate 9, the actuator is configured to continue moving the moving plate 9 towards the endstop 504. Since the carrier 8 is already engaging the endstops 504, it can no longer move with the moving plate 9 and therefore the endstops 504 causes it to slide across the planar surface of the moving plate, thereby changing its relative position on the moving plate 9.

In the particular configuration as shown in figure 5, the carrier 8 is placed at the default position in which it is centred on the second part along a movement direction. In the particular configuration as shown in figure 5, the carrier 8 is placed at the default position. In this default position, the carrier 8 allows the image sensor 6 to align with the optical axis of other optical components (e.g. lens). Deviating from such default position may cause image misalignment, or other negative impacts.

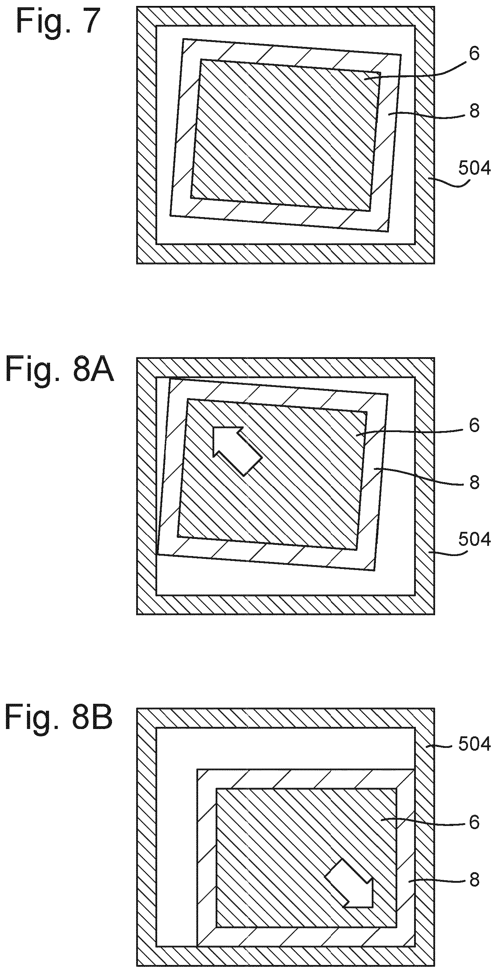

Such an arrangement is particularly useful if the carrier 8 is not positioned at the default position as shown in Figure 7. That is, the carrier 8 may be positioned closer to one of the endstops 504 than the others. In the illustration as shown in Figure 7, the carrier 8 is positioned at an off-centred position, as well as angled to all of the endstops 504. Such orientation may be a result of sudden acceleration which displaces the carrier 8 from its default position. Without suitable realignment, the captured image may be angled, or worse distorted because the image sensor is no longer aligned with the optical axis.

Therefore, the use of a suitable realignment technique, the actuator arrangement is capable of restoring the carrier 8 to its default position. As shown in Figure 8A, the actuator may first drive the moving plate 9 diagonally towards one of the corner adjoining two perpendicular endstops 504 (shown as the endstops in the top and right-hand sides of the figure). Doing so engages the carrier 8 with the two endstops 504. As the moving plate 9 continues its movement, the carrier 8 rotates and realigns with the correct orientation. During this first movement, the carrier 8 may have moved, and past, its default position along the direction of movement.

To return the carrier to its default position, the moving plate 9 moves in a diagonally opposite direction towards the other two endstops 504, as shown in Figure 8B. Note that during the second movement, the carrier 8 maintains the correct orientation on the moving plate 9, e.g. its sides each aligns with a corresponding endstop 504. Therefore, as the carrier 8 engages the other two endstops 504, further movement of the moving plate 9 may move the carrier 8 to its default position.

Figure 5 also shows plural axial stops 508 proud of the endstops 504. The axial end stops 508 may stop the carrier 8 from being removed from the apparatus in an event of sudden acceleration. That is, the carrier 8 is contained within the bounds of the end stops 504, 508 such that even it is temporarily detached the magnetic forces may cause it to reattach onto the surface of the moving plate 9 (after which the carrier 8 can be returned to its default position relative to the moving plate 9 as described above).

## Claims

1. An actuator assembly comprising:
a first part (4) and a second part (9) movable relative to the first part;
a third part (8) supported on the second part; and
an actuator arrangement comprising one or more shape memory alloy (SMA) wires (40) connected between the first part and the second part,
the one or more SMA wires being arranged to, on contraction, drive movement of the second part in a movement direction, in which the third part moves with the second part, such that the relative positions and orientations of the second part and the third part remain unchanged, until the third part engages an endstop (504) on the first part;
wherein the actuator arrangement is arranged to continue driving movement of the second part along the movement direction, and thereby causes the third part to move relative to the second part.

2. The actuator assembly according to claim 1, wherein the third part is maintained at the moved position on the second part when the second part moves in an opposite direction to the movement direction.

3. The actuator assembly according to claim 1 or claim 2, wherein at a default position and/or orientation the third part is separated from the endstop by a predetermined clearance, the said predetermined clearance is arranged to accommodate the movement of the second part during normal operation during which the third part is maintained at the default position and/or orientation on the second part, optionally wherein the third part is arranged to, when positioned away from the default position and/or orientation, return to the default position when it is being driven against the endstop.

4. The actuator assembly according to claim 3, wherein at the default position and/or orientation the third part is centred on the second part in the movement direction and/or wherein the second part is moveable within a movement range during the normal operation, wherein the second part is configured to move beyond the movement range to return the third part to the default position and/or orientation.

5. The actuator assembly according to any one of the preceding claims, wherein the endstops are provided on opposite sides of the third part along the movement direction.

6. The actuator assembly according to any one of the preceding claims, wherein the actuator arrangement comprises a plurality of the SMA wires capable of being selectively driven to move the second part in two orthogonal directions in a movement plane, and wherein an endstop is provided at each of four sides of the second part.

7. The actuator assembly according to claim 6 when depending on claim 3 or 4, wherein the actuator arrangement is configured i) to sequentially move the second part toward the four quadrilateral sides so as to drive the third part against the respective endstops to move the third part to its default position and/or orientation or ii) to move the second part diagonally towards a corner between two sides so as to drive the third part against two adjacent endstops to move the third part to its default position and/or orientation.

8. The actuator assembly according to any one of the preceding claims, wherein the second part comprises a planar surface, wherein the third part is supported, and movable, on the planar surface.

9. The actuator assembly according to any one of the preceding claims, comprising means (502) arranged to apply a retaining force on the third part in order to maintain the relative positions and/or orientations of the third part and the second part during normal operation, wherein the retaining force is insufficient to maintain said relative position and/or orientation when the third part is driven against the endstop, optionally wherein the means comprises one or more of a biasing element, a magnet and a viscous fluid.

10. The actuator assembly according to any one of the preceding claims, comprising one or more further endstops (508) configured to limit movement of the third part relative to the second part in a direction other than a movement direction.

11. The actuator assembly according to any one of the preceding claims, wherein the third part comprises any one of a lens carriage, a support for an image sensor or a light emitter.

12. A method of operating an actuator assembly having a first part and a second part movable relative to the first part, comprising:
moving, by an actuator arrangement, the second part along a movement direction, wherein a third part supported on the second part moves with the second part, such that the relative positions and orientations of the second part and the third part remain unchanged, until the third part engages an endstop on the first part; and
continuing to move the second part, along the movement direction, and thereby driving movement of the third part relative to the second part.

13. The method according to claim 12, comprising moving the third part to a default position and/or orientation, wherein, at the default position and/or orientation, the third part is separated from the endstop by a predetermined clearance.

14. The method according to claim 12, comprising: moving the second part so as to move the third part to a desired position and/or orientation relative to the second part; and then affixing the third part to the second part.

15. An actuator assembly obtained by providing an actuator assembly according to claim 1 and applying the method of operating the actuator assembly according to claim 12 followed by a step of affixing the third part to the second part.

## Patentansprüche

1. Aktuatorbaugruppe, umfassend:
einen ersten Teil (4) und einen zweiten Teil (9), der relativ zu dem ersten Teil beweglich ist;
einen dritten Teil (8), der auf dem zweiten Teil gelagert ist; und
eine Aktuatoranordnung, die einen oder mehrere Drähte (40) aus einer Formgedächtnislegierung (SMA) umfasst, die zwischen dem ersten Teil und dem zweiten Teil verbunden sind,
wobei der eine oder die mehreren SMA-Drähte angeordnet sind, um bei Kontraktion eine Bewegung des zweiten Teils in einer Bewegungsrichtung anzutreiben, in der sich der dritte Teil mit dem zweiten Teil bewegt, sodass die relativen Positionen und Ausrichtungen des zweiten Teils und des dritten Teils unverändert bleiben, bis der dritte Teil in einen Endanschlag (504) an dem ersten Teil eingreift;
wobei die Aktuatoranordnung angeordnet ist, um die Bewegung des zweiten Teils entlang der Bewegungsrichtung weiter anzutreiben und dadurch bewirkt, dass sich der dritte Teil relativ zu dem zweiten Teil bewegt.

2. Aktuatorbaugruppe nach Anspruch 1, wobei der dritte Teil in der bewegten Position auf dem zweiten Teil gehalten wird, wenn sich der zweite Teil in einer Richtung entgegengesetzt zu der Bewegungsrichtung bewegt.

3. Aktuatorbaugruppe nach Anspruch 1 oder 2, wobei in einer Standardposition und/oder -ausrichtung der dritte Teil um einen vorbestimmten Abstand von dem Endanschlag getrennt ist, wobei der vorbestimmte Abstand angeordnet ist, um die Bewegung des zweiten Teils während des normalen Betriebs aufzunehmen, während dessen der dritte Teil in der Standardposition und/oder -ausrichtung auf dem zweiten Teil gehalten wird, wobei der dritte Teil optional angeordnet ist, um, wenn er von der Standardposition und/oder -ausrichtung entfernt positioniert ist, in die Standardposition zurückzukehren, wenn er gegen den Endanschlag getrieben wird.

4. Aktuatorbaugruppe nach Anspruch 3, wobei in der Standardposition und/oder - ausrichtung der dritte Teil auf dem zweiten Teil in der Bewegungsrichtung zentriert ist und/oder wobei der zweite Teil innerhalb eines Bewegungsbereichs während des normalen Betriebs beweglich ist, wobei der zweite Teil dazu konfiguriert ist, sich über den Bewegungsbereich zu bewegen, um den dritten Teil in die Standardposition und/oder -ausrichtung zurückzubringen.

5. Aktuatorbaugruppe nach einem der vorstehenden Ansprüche, wobei die Endanschläge auf gegenüberliegenden Seiten des dritten Teils entlang der Bewegungsrichtung bereitgestellt sind.

6. Aktuatorbaugruppe nach einem der vorstehenden Ansprüche, wobei die Aktuatoranordnung eine Mehrzahl der SMA-Drähte umfasst, die selektiv angetrieben werden können, um den zweiten Teil in zwei orthogonalen Richtungen in einer Bewegungsebene zu bewegen, und wobei an jeder der vier Seiten des zweiten Teils ein Endanschlag bereitgestellt ist.

7. Aktuatorbaugruppe nach Anspruch 6, wenn abhängig von Anspruch 3 oder 4, wobei die Aktuatoranordnung dazu konfiguriert ist, i) den zweiten Teil sequenziell in Richtung der vier viereckigen Seiten zu bewegen, um den dritten Teil gegen die jeweiligen Endanschläge anzutreiben, um den dritten Teil in seine Standardposition und/oder -ausrichtung zu bewegen, oder ii) den zweiten Teil diagonal zu einer Ecke zwischen zwei Seiten zu bewegen, um den dritten Teil gegen zwei benachbarte Endanschläge anzutreiben, um den dritten Teil in seine Standardposition und/oder -ausrichtung zu bewegen.

8. Aktuatorbaugruppe nach einem der vorstehenden Ansprüche, wobei der zweite Teil eine ebene Oberfläche umfasst, wobei der dritte Teil auf der ebenen Oberfläche gelagert und beweglich ist.

9. Aktuatorbaugruppe nach einem der vorstehenden Ansprüche, die ein Mittel (502) umfasst, das angeordnet ist, um eine Rückhaltekraft auf den dritten Teil auszuüben, um die relativen Positionen und/oder Ausrichtungen des dritten Teils und des zweiten Teils während des normalen Betriebs aufrechtzuerhalten, wobei die Rückhaltekraft nicht ausreichend ist, um die relative Position und/oder Ausrichtung aufrechtzuerhalten, wenn der dritte Teil gegen den Endanschlag angetrieben wird, wobei optional das Mittel ein oder mehrere Vorspannelemente, einen Magneten und ein viskoses Fluid umfasst.

10. Aktuatorbaugruppe nach einem der vorstehenden Ansprüche, die einen oder mehrere weitere Endanschläge (508) umfasst, die dazu konfiguriert sind, die Bewegung des dritten Teils relativ zu dem zweiten Teil in einer anderen Richtung als einer Bewegungsrichtung zu begrenzen.

11. Aktuatorbaugruppe nach einem der vorstehenden Ansprüche, wobei der dritte Teil eines von einem Linsenschlitten, einer Halterung für einen Bildsensor oder einem Lichtemitter umfasst.

12. Verfahren zum Betreiben einer Aktuatorbaugruppe mit einem ersten Teil und einem relativ zu dem ersten Teil beweglichen zweiten Teil, umfassend:
Bewegen des zweiten Teils entlang einer Bewegungsrichtung durch eine Aktuatoranordnung, wobei sich ein dritter Teil, der auf dem zweiten Teil gelagert ist, mit dem zweiten Teil bewegt, sodass die relativen Positionen und Ausrichtungen des zweiten Teils und des dritten Teils unverändert bleiben, bis der dritte Teil in einen Endanschlag an dem ersten Teil eingreift; und
Weiterbewegen des zweiten Teils entlang der Bewegungsrichtung und dadurch Antreiben einer Bewegung des dritten Teils relativ zu dem zweiten Teil.

13. Verfahren nach Anspruch 12, umfassend das Bewegen des dritten Teils in eine Standardposition und/oder -ausrichtung, wobei in der Standardposition und/oder -ausrichtung der dritte Teil um einen vorbestimmten Abstand von dem Endanschlag getrennt ist.

14. Verfahren nach Anspruch 12, umfassend:
Bewegen des zweiten Teils, um den dritten Teil in eine gewünschte Position und/oder Ausrichtung relativ zu dem zweiten Teil zu bewegen; und dann
Befestigen des dritten Teils an dem zweiten Teil.

15. Aktuatorbaugruppe, die durch Bereitstellen einer Aktuatorbaugruppe nach Anspruch 1 und durch Anwenden des Verfahrens zum Betreiben der Aktuatorbaugruppe nach Anspruch 12, gefolgt durch einen Schritt des Befestigens des dritten Teil an dem zweiten Teil erhalten wird.

## Revendications

1. Ensemble actionneur comprenant :
une première partie (4) et une deuxième partie (9) mobile par rapport à la première partie,
une troisième partie (8) supportée par la deuxième partie, et
un dispositif actionneur comprenant un ou plusieurs fils en alliage à mémoire de forme (AMF) (40) raccordés entre la première partie et la deuxième partie ;
le ou les fils AMF étant agencés de manière à, lors d'une contraction, entraîner le déplacement de la deuxième partie dans une direction de déplacement, au cours duquel la troisième partie se déplace avec la deuxième partie, si bien que les positions et orientations relatives de la deuxième partie et de la troisième partie restent inchangées, jusqu'à ce que la troisième partie vienne au contact d'une butée (504) présente sur la première partie,
le dispositif actionneur étant agencé pour continuer à entraîner le déplacement de la deuxième partie dans la direction de déplacement, amenant ainsi la troisième partie à se déplacer par rapport à la deuxième partie.

2. Ensemble actionneur selon la revendication 1, dans lequel la troisième partie est maintenue en position déplacée sur la deuxième partie lorsque la deuxième partie se déplace dans une direction opposée à la direction de déplacement.

3. Ensemble actionneur selon la revendication 1 ou la revendication 2, dans lequel, dans une position et/ou une orientation par défaut, la troisième partie est séparée de la butée par un écart prédéterminé, ledit écart prédéterminé étant agencé pour s'adapter au déplacement de la deuxième partie pendant le fonctionnement normal au cours duquel la troisième partie est maintenue dans la position et/ou l'orientation par défaut sur la deuxième partie, ladite troisième partie étant éventuellement agencée pour, lorsqu'elle est se trouve hors de la position et/ou de l'orientation par défaut, revenir à la position par défaut lorsqu'elle est entraînée contre la butée.

4. Ensemble actionneur selon la revendication 3, dans lequel, dans la position et/ou l'orientation par défaut, la troisième partie est centrée sur la deuxième partie dans la direction de déplacement, et/ou dans lequel la deuxième partie est mobile selon une plage de déplacement pendant le fonctionnement normal, ladite deuxième partie étant conçue pour se déplacer au-delà de la plage de déplacement afin de ramener la troisième partie dans la position et/ou l'orientation par défaut.

5. Ensemble actionneur selon l'une quelconque des revendications précédentes, dans lequel les butées sont prévues sur les côtés opposés de la troisième partie le long de la direction de déplacement.

6. Ensemble actionneur selon l'une quelconque des revendications précédentes, dans lequel le dispositif actionneur comprend une pluralité de fils AMF pouvant être entraînés de manière sélective pour déplacer la deuxième partie dans deux directions orthogonales dans un plan de déplacement, une butée étant prévue sur chacun des quatre côtés de la deuxième partie.

7. Ensemble actionneur selon la revendication 6, dans la mesure ou elle dépend de la revendication 3 ou 4, dans lequel le dispositif actionneur est conçu i) pour déplacer la deuxième partie successivement vers les quatre côtés quadrilatéraux de manière à entraîner la troisième partie contre les butées respectives afin de déplacer la troisième partie vers sa position et/ou son orientation par défaut ou ii) pour déplacer la deuxième partie diagonalement vers un coin entre deux côtés afin d'entraîner la troisième partie contre deux butées adjacentes pour déplacer la troisième partie vers sa position et/ou son orientation par défaut.

8. Ensemble actionneur selon l'une quelconque des revendications précédentes, dans lequel la deuxième partie comprend une surface plane, la troisième partie étant supportée par la surface plane et mobile sur celle-ci.

9. Ensemble actionneur selon l'une quelconque des revendications précédentes, comprenant un moyen (502) agencés pour appliquer une force de retenue sur la troisième partie afin de maintenir les positions et/ou orientations relatives de la troisième partie et de la deuxième partie pendant le fonctionnement normal, la force de retenue étant insuffisante pour maintenir ladite position et/ou orientation relative lorsque la troisième partie est entraînée contre la butée, ledit moyen comprenant éventuellement un élément de sollicitation, un aimant et/ou un fluide visqueux.

10. Ensemble actionneur selon l'une quelconque des revendications précédentes, comprenant une ou plusieurs butées supplémentaires (508) conçues pour limiter le déplacement de la troisième partie par rapport à la deuxième partie dans une direction autre que la direction de déplacement.

11. Ensemble actionneur selon l'une quelconque des revendications précédentes, dans lequel la troisième partie comprend un porte-objectif, un support pour capteur d'image ou bien un émetteur de lumière.

12. Procédé d'exploitation d'un ensemble actionneur présentant une première partie et une deuxième partie mobile par rapport à la première partie, comprenant :
le déplacement, par un dispositif actionneur, de la deuxième partie le long d'une direction de déplacement, une troisième partie supportée par la deuxième partie se déplaçant avec la deuxième partie, si bien que les positions et orientations relatives de la deuxième partie et de la troisième partie restent inchangées, jusqu'à ce que la troisième partie vienne au contact d'une butée présente sur la première partie, et
la continuation du déplacement de la deuxième partie le long de la direction de déplacement, amenant ainsi le déplacement de la troisième partie par rapport à la deuxième partie.

13. Procédé selon la revendication 12, comprenant le déplacement de la troisième partie vers une position et/ou une orientation par défaut, et dans lequel, dans la position et/ou l'orientation par défaut, la troisième partie est séparée de la butée par un écart prédéterminé.

14. Procédé selon la revendication 12, comprenant :
le déplacement de la deuxième partie de façon à déplacer la troisième partie vers une position et/ou une orientation souhaitée par rapport à la deuxième partie, puis
la fixation de la troisième partie à la deuxième partie.

15. Ensemble actionneur obtenu par mise à disposition d'un ensemble actionneur selon la revendication 1 et application du procédé d'exploitation de l'ensemble actionneur selon la revendication 12, avant une étape de fixation de la troisième partie à la deuxième partie.
